# EUROPÄISCHE PATENTSCHRIFT

(11) **EP 4 117 938 B1**
(45) Veröffentlichungstag und Bekanntmachung des Hinweises auf die Patenterteilung: **13.03.2024**
(21) Anmeldenummer: 21844332.3
(22) Anmeldetag: 23.12.2021
(51) Int. Cl.: B60C 23/04

(54) **REIFENDRUCKSENSOR**
TIRE PRESSURE SENSOR
CAPTEUR DE PRESSION DE PNEU

(30) Priorität: 29.04.2021 DE 102021110982
(43) Veröffentlichungstag der Anmeldung: 18.01.2023
(73) Patentinhaber: Huf Baolong Electronics Bretten GmbH, 75015 Bretten (DE)
(72) Erfinder: MÜLLER, Benjamin, 45133 Essen (DE); VÖGELI, Patrick, 76356 Weingarten (DE)
(74) Vertreter: Zenz Patentanwälte Partnerschaft mbB
(86) Internationale Anmeldenummer: PCT/EP2021/087449
(87) Internationale Veröffentlichungsnummer: WO 2022/228709

(56) Entgegenhaltungen:
- EP-A1- 2 982 523
- GB-A- 2 584 854
- US-A1- 2008 117 036

## Beschreibung

Die Erfindung betrifft einen Reifendrucksensor. Insbesondere betrifft die Erfindung einen universellen Reifendrucksensor, der in einfacher Weise zur Kommunikation mit einer Vielzahl von fahrzeugseitigen Reifendruckkontrollsystemen (TPMS) konfigurierbar ist.

Automatische Reifendruckkontrollsysteme sind im Stand der Technik bekannt. Der Einsatz solcher Systeme unterstützt Fahrer dabei, immer mit dem korrekten Reifenfülldruck zu fahren, da der Fahrer bei Abweichung vom richtigen Druck durch eine entsprechende Warnmeldung im Fahrgastraum informiert wird. Der richtige Reifendruck hat sowohl Einfluss auf die Sicherheit, die optimale Fahrdynamik und auch den Fahrkomfort.

Sogenannte direkte Reifendruckkontrollsysteme arbeiten besonders präzise. Dabei erfassen Reifendrucksensoren an jedem Rad den Reifendruck und ggf. weitere Reifeninformationen, z.B. die Temperatur. Diese Informationen werden zusammen mit einer Kennung des Reifendrucksensors per Funksignal an ein Steuergerät im Fahrzeug gesendet. Beispielsweise kann eine solche Datenübertragung im Bereich von 434 MHz oder 315 MHz (hochfrequente Kommunikation oder HF-Kommunikation) erfolgen.

Eine Kommunikation von der fahrzeugseitigen Steuereinheit mit den Reifendrucksensoren erfolgt bei sogenannten getriggerten Systemen nach Aussenden eines Abfragesignals durch das Steuergerät, diese Anforderung kann im niederfrequenten Bereich (z.B. 125 kHz) erfolgen. Aufgrund der niedrigen Frequenz ist die Reichweite eines niederfrequenten Signals, beispielsweise eines Bereiches um 125 kHz gering. Mit geeigneter Dimensionierung kann ein solcher steuergerätseitiger Triggersender so ausgelegt werden, dass die Reichweite nur wenige Meter beträgt, so dass nur die Reifen am eigenen Fahrzeug angesprochen werden. Es gibt sowohl Systeme mit mehreren Triggersendern als auch mit einem einzigen Triggersender.

Auf den Trigger antwortet der Reifendrucksensor, wie oben erwähnt, drahtlos, z.B. mit einem Datenprotokoll im Hochfrequenzbereich. Auch Systeme die gänzlich ohne Trigger auskommen und die Daten in Abhängigkeit von Situationsveränderungen von den Reifensensoren übermitteln sind bekannt und üblich.

Die Druckschrift EP 2 982 523 A1 beschreibt einen gattungsgemäßen universellen Reifendrucksensor.

Ein Verfahren und System zur drahtlosen Reifendrucküberwachung ist beispielsweise aus der EP 2 280 837 B1 bekannt.

Reifendrucksensoren enthalten irgendeine Art von Energiequelle oder Energiespeicher, beispielsweise eine Batterie oder einen Piezo-Generator. Außerdem sind ein Drucksensor und ggf. ein Temperatursensor (evtl. auch weitere Sensoren) vorgesehen, welche mit einem Mikrocontroller gekoppelt sind. Die üblichen Reifendrucksensoren weisen dabei eine Hochfrequenz-Sendeeinheit mit einer zugehörigen Antenne und eine Niederfrequenz-Empfangseinheit mit einer zugehörigen Spule auf. Allerdings können auch Systeme mit ausschließlich hochfrequenter Empfangs-/Sendetechnik realisiert werden. Ggf. sind auch noch Beschleunigungssensoren und Schwingquarze in dem Sensoraufbau vorgesehen. Zahlreiche der Komponenten können zu einer standardisierten Messschaltung integriert sein (sogenannte Sensor-IC) .

Trotz der Einheitlichkeit der Komponenten eines Reifendrucksensors sind herstellerabhängig die Sensoren hinsichtlich der Aussendung von den erfassten Daten und sonstigen Kenndaten auf die Fahrzeugsysteme anzupassen. Beispielsweise haben unterschiedliche Fahrzeughersteller unterschiedliche Anforderungen hinsichtlich Trägerfrequenz, Modulation des Signals, Datenformaten oder Verschlüsselungstechniken der Signale.

Universalsensoren folgen dem Ansatz, mit einheitlichen Sensoren eine Vielzahl von Fahrzeugen abzudecken. Der gattungsgemäße Sensor (siehe EP 2 982 523 A1) ist als konfigurierbarer Universalsensor ausgebildet, der von Anfang an mit einer Vielzahl von Sendeprotokollen und Parametern ausgestattet ist, aber noch einige entscheidende Informationen benötigt, bevor er die Kommunikation mit der fahrzeugseitigen Einrichtung aufnehmen kann. Es wird nämlich aus einem Satz gespeicherter Konfigurationen eine passende ausgewählt, gemäß derer der Betrieb anschließend ausgeführt wird. Nach erfolgreicher Konfiguration sendet der konfigurierte Universalsensor nur noch das ausgewählte, passende Protokoll. Die zur Konfiguration an den Reifendrucksensor zu übertragenden Informationen sind in Datenmenge um Größenordnungen kleiner als bei einer vollständigen Programmierung mit Programmübertragung. Es wird dem Sensor lediglich mitgeteilt, welche seiner gespeicherten Konfigurationen er zur Kommunikation verwerten soll. Der gattungsgemäße Reifendrucksensor weist einen in der Steuerschaltung internen Speicher auf und außerdem einen zu der Messschaltung separaten Speicherbaustein, der wesentlich mehr Speicherkapazität aufweist als der interne Speicher.

Soweit in dieser Anmeldung von Messschaltung (Sensor-IC) die Rede ist, ist damit eine intergierte Schaltung gemeint, welche einen Mikrocontroller, die Druckmessfunktion und ggf. weitere Sensoren aufweist. Derartige Messschaltungen sind als integrierte Schaltungen von verschiedenen Anbietern am Markt verfügbar (z.B. als Tire Pressure Monitoring System TX Module von dem Unternehmen Texas Instruments). Die Steuerschaltung umfasst diese Messchaltung nebst anderen elektronischen Komponenten und kann die von der Messschaltung gelieferten Messdaten übernehmen und an gekoppelte Mittel zur drahtlosen Kommunikation geben. Solche Mittel zur drahtlosen Kommunikation enthalten Empfangsspulen und/oder Sendespulen. Eine Energieversorgung ist als Batteriespeicher oder auch als Generator, z.B. Piezo-Generator ausgebildet.

Der zusätzliche Speicher kann eine beliebige Art von haltestabilem Speicher sein, z.B. ein Flash-Speicher (beispielhaft ein SPI[Serial Peripheral Interface] Flash-Speicher, z.B. von der Firma Micron).

Der Sensor bringt in diesem Zusatzspeicher sämtliche Informationen mit, die er für die Datenerfassung und Übermittlung gemäß Spezifikation unterschiedlicher Fahrzeughersteller benötigt. Es kann sich dabei um einzelne Parametersätze handeln, es kann sich jedoch auch um vollständige Programme oder Teilprogramme sowie alle anderen Arten von elektronisch speicherbaren Daten handeln.

In seinem Anfangszustand ist die Steuerschaltung in der Lage, auf den separaten Speicherbaustein lesend zuzugreifen. Die Steuerschaltung verfügt dazu über eine Basis-Funktionalität, z.B. in Gestalt eines Bootloaders, welcher die Auswahlkennung von einem drahtlosen Kommunikationsgerät empfangen kann und die Kommunikation zum Umkopieren mit dem separaten Speicherbaustein abwickelt.

Dem Sensor werden beim Einbau am Fahrzeug zur Konfiguration Informationen übermittelt, welche ihm die Auswahl eines Konfigurationssatzes aus dem separaten Speicherbaustein ermöglichen. Dies kann insbesondere mit einem drahtlosen System oder einer kurzzeitigen galvanischen Kontaktierung geschehen. Als drahtlose Systeme sind sogenannte RDKS-Diagnosegeräte am Markt verfügbar und bekannt. Diese können verschiedene Kommandos im Niederfrequenzbereich senden. Die Datenübertragungsrate ist dabei eher gering, es ist jedoch nur ein kurzer Datensatz zu übermitteln. Während der separate Speicherbaustein die Konfigurationsdaten zur anfänglichen Konfiguration des Reifendrucksensors mitbringt und diese auch nach erfolgter Konfiguration behalten kann, bleibt der Sensor weiterhin ein Messsystem, welches im Betrieb erfasste aktuelle Daten erfasst und weiterleitet. Aufgabe der Erfindung ist es, die Möglichkeiten des genannten Universalsensors zu erweitern und Diagnosemöglichkeiten für vom Sensor erfasste Zustandsdaten bereitzustellen.

Diese Aufgabe wird gelöst durch einen Universalsensor mit den Merkmalen des Patentanspruchs 1 sowie ein Verfahren mit den Merkmalen des Anspruchs 10.

Erfindungsgemäß ist vorgesehen, dass nach anfänglicher Konfiguration des Reifendrucksensors der separate Speicherbaustein einer geänderten Nutzung zugeführt wird. Die anfängliche Konfiguration unter Auslesen des separaten Speicherbausteins wurde oben bereits kurz beschrieben. Beim Einbau in ein Fahrzeug werden Daten von dem separaten Speicherbaustein in einen internen Speicher der Steuerschaltung bzw. der zur Steuerschaltung gehörigen Messschaltung kopiert. Diese Daten definieren, wie die erfassten Druckmesswerte codiert und an ein Fahrzeugsystem übertragen werden. Sie legen z.B. ein Protokoll für die Datenkommunikation fest. Nachdem diese Konfiguration einmalig stattgefunden hat, verbleiben die kopierte Konfigurationsdaten in dem internen Speicher. Die Steuerschaltung wechselt hinsichtlich der Ansteuerung des separaten Speicherbausteins nach erfolgreicher Konfiguration erfindungsgemäß in einen Schreib- oder Speichermodus. In diesem Speichermodus wird der ursprünglich als Lesespeicher und Datenquelle zum Transport der Konfigurationsdaten verwendete separate Speicherbaustein nun zur Speicherung von Messwerten verwendet. Da der separate Speicherbaustein nicht zu der integrierten Messschaltung gehört, kann er einerseits bedarfsmäßig in seiner Größe angepasst werden und andererseits flexibel im Schaltungsbereich oder an anderer Stelle im Bauraum des Reifendrucksensors platziert werden. Der separate Speicherbaustein ist geeignet eine Vielzahl von Messwerten aufzunehmen, die nachträglich aus dem Speicherbaustein ausgelesen werden können. Durch die Trennung des separaten Speicherbausteins von dem internen Speicher der Messschaltung ist es möglich, den Speicherbaustein zugänglich im oder am Reifendrucksensor anzuordnen.

Durch die Speicherung von Messdaten in dem separaten Speicherbausteins wird der Reifendrucksensor in seinen Möglichkeiten als dauerhafter Datenlogger erweitert. Es ist möglich aufgezeichnete, historische Messdaten aus dem separaten Speicher nachträglich auszulesen, beispielsweise um Nutzungsverhalten, Unfallursachen o. ä. zu rekonstruieren. Das Auslesen kann durch unmittelbare Ansteuerung des separaten Speicherbausteins erfolgen. Dazu kann der separate Speicherbaustein z.B. galvanisch mit einem Lesegerät kontaktiert werden, während er sich noch im Reifendrucksensor befindet oder nachdem er entnommen wurde. Es ist jedoch auch möglich und besonders komfortabel, die Auslesung des separaten Speicherbausteins drahtlos, mithilfe der Steuerschaltung in dem Reifendrucksensor vorzunehmen. Die Steuerschaltung verfügt über eine Kopplung mit Mitteln zur drahtlosen Kommunikation, um die erfassten Druckmesswerte im Betrieb des Reifendrucksensors an eine entfernte Empfangseinrichtung im Kraftfahrzeug zu übermitteln. Die Mittel zur drahtlosen Kommunikation, gegebenenfalls ergänzt durch Mittel zur Übertragung gemäß standardisierten Funkprotokollen (zum Beispiel Bluetooth oder sonstige kurze Reichweite Funkstandards), können auch als sende-Empfangsmittel zur Abwicklung einer Diagnosekommunikation verwendet werden. Soll eine Auslesung des separaten Speicherbausteins mit darauf gespeicherten historischen Messwerten erfolgen, kann beispielsweise mit einem Diagnosegerät oder einem mobilen Kommunikationsgerät, auf dem eine entsprechende Applikation installiert wird, eine drahtlose Kommunikation mit der Steuerschaltung initiiert werden. Die Steuerschaltung kann dann aus dem separaten Speicherbaustein historische Messdaten auslesen und diese über die Mittel zur drahtlosen Kommunikation übertragen. Bei einem solchen Vorgang kann die Kommunikation gemäß einem gänzlich anderen Protokoll erfolgen als es zur drahtlosen Kommunikation im laufenden Überwachungsbetrieb des Reifendrucksensors mit einer fahrzeugseitigen Einrichtung erforderlich ist. Da ein Empfang auf Seiten des Fahrzeuges nicht das Ziel der Kommunikation ist, sondern die Auslesung der historischen Daten über die drahtlose Kommunikation, kann ein anderes, abweichendes Protokoll und ein anderer, abweichender Funkstandard bedient werden.

Es ist vorteilhaft, wenn die Mittel zur drahtlosen Kommunikation des Reifendrucksensors wenigstens eine Antenne aufweisen, welche zum Versand und ggf. Empfang von Daten auf unterschiedlichen Trägerfrequenzen ausgebildet ist. Beispielsweise kann die Antenne zum Versand auf verschiedenen Trägerfrequenzen oder Frequenzbändern ausgebildet sein, wobei ein Frequenzbereich eine Kommunikation gemäß dem Bluetooth Standard erlaubt. Auch eine Kommunikation gemäß einem anderen Nahfunk-Standard (zum Beispiel NFC) ist möglich. Die Wahl unterschiedlicher Trägerfrequenzen, die gegebenenfalls anwendungsspezifisch gewählt werden, stellt einen ungestörten Datenaustausch sicher. Außerdem kann so gewährleistet werden, dass hinsichtlich der Auslösung von Diagnosedaten eine Vielzahl von Geräten gemäß einem standardisierten Protokoll eingesetzt werden kann. Ein solcher Reifendrucksensor arbeitet entsprechend mit mehreren Protokollen, wobei eines der Protokolle spezifisch auf das Fahrzeug angepasst wird, während das andere Protokoll ein allgemeines, standardisiertes Protokoll zum Auslesen der Diagnosedaten sein kann, die im separaten Speicherbaustein abgelegt wurden.

Es ist alternativ vorteilhaft, wenn die Mittel zur drahtlosen Kommunikation des Reifendrucksensors mehrere Antennen, jeweils zum Versand von Daten auf verschiedenen Trägerfrequenzen aufweisen. Die Anordnung mehrerer Antennen im Reifendrucksensor, von denen beispielsweise eine für die Kommunikation mit einer entfernten Empfangseinrichtung am Fahrzeug ausgelegt ist, und eine andere zur Kommunikation gemäß einem drahtlosen Standardprotokoll, erweitert die Möglichkeiten der Diagnose des Reifendrucksensors. Gegenüber der Verwendung einer Antenne mit mehreren Trägerfrequenzen werden dieselben Vorteile erreicht, es ist jedoch sogar ein zeitgleicher Betrieb möglich.

Da der separate Speicherbaustein nicht zwingend in der Nähe der integrierten Messschaltung platziert werden muss, ist es bevorzugt, den separaten Speicherbaustein beanstandet von der Steuerschaltung, vorzugsweise auf einer gemeinsamen Platine zu platzieren. Eine solche Platzierung stellt die Möglichkeit zur Verfügung, bedarfsweise unterschiedliche Bauformen und Speicherkapazitäten in einfacher Weise bei einer ansonsten gleich verbleibenden Platinenbestückung vorzunehmen. Die Belegung der Platine kann einfach an gesteigerte Speicheranforderungen oder geänderte Speicherprodukte angepasst werden, wobei die Wahl des separaten Speicherbausteins weitgehend unabhängig von der Wahl der Messschaltung erfolgen kann.

In einer Weiterbildung der Erfindung ist der separate Speicherbaustein nicht nur separat und beanstandet von der Steuerschaltung auf einer Platine platziert, sondern der Speicherbaustein ist derart lösbar auf der Platine angeordnet, dass der Speicherbaustein zum Auslesen gespeicherter Daten und zu Diagnosezwecken zerstörungsfrei von der Platine abnehmbar ist.

In einer solchen Gestaltung kann der Speicherbaustein beispielsweise zur galvanischen Kontaktierung auf die Platine aufgesteckt sein und mit mechanischen Haltemitteln in seiner Position arretiert sein. Ist die Entnahme des Speicherbausteins, beispielsweise für eine forensische Analyse nach einem Unfall gewünscht, kann dieser durch Lösung der mechanischen Haltemittel freigegeben werden und einer Analyse zugeführt werden, indem der entnommene Speicherbaustein in eine zugehörige Ausleseschaltung aufgenommen wird.

In einer bevorzugten Gestaltung ist die Steuerschaltung, wie vorstehend bereits erwähnt, derart ausgebildet, dass sie im separaten Speicherbaustein gespeicherte Daten auslesen und versenden kann.

Im üblichen Betrieb legt die Steuerschaltung die mit der Messschaltung erhobenen Werte sämtlich oder in vorangestellten zeitlichen Abständen oder bei Erfüllung von vorgegebenen Kriterien (z.B. bei Fahrtantritt oder beim Anhalten) im separaten Speicherbaustein ab. Das Auslesen der historischen Werte erfolgt nur auf Anforderung mit einem passenden Diagnosegerät. Dieses Diagnosegerät kann ein Gerät sein, welches auch zur Programmierung bzw. zur anfänglichen Konfiguration des Reifendrucksensors gemäß der obigen Beschreibung ausgebildet ist. Es kann sich jedoch auch um ein Gerät handeln, welches eine Kommunikation gemäß einem Standardprotokoll (zum Beispiel Bluetooth) mit der Steuerschaltung abwickelt. Auf Anforderung liest dann die Steuerschaltung im separaten Speicherbaustein hinterlegte Werte aus, wobei hier auch eine durch Anforderung bedingte Selektion erfolgen kann (beispielsweise Werte einer bestimmten Zeitspanne oder Werte, die bestimmten Kriterien genügen). Eine derartige Auslesung von gespeicherten Werten ist beispielsweise bei Werkstattbesuchen, bei Übergaben des Fahrzeugs an andere Nutzer oder auch durch den Benutzer selbst möglich, da sie zerstörungsfrei und besonders bequem abläuft. Es kann vorgesehen sein, den Aufbau einer Verbindung zur Auslösung von Messwerten an bestimmte Authentifizierungskriterien zu koppeln. Auf diese Weise kann verhindert werden, dass Unberechtigte sich Einblick in die Daten verschaffen. Beispielsweise kann vorgesehen sein, dass eine im Fahrzeug über das Fahrzeugsystem auslesbare Kennung des Reifendrucksensors eingegeben werden muss, um mit diesem eine Verbindung und Auslesung der Messwerte auszuhandeln. Auf die Daten im Fahrzeugsystem hat nur ein berechtigter Zugriff, so dass auch nur er die entsprechende Diagnoseverbindung aufbauen kann.

Wie oben bereits erwähnt, kann eine solche Diagnoseverbindung, über welche die im separaten Speicherbaustein gespeicherten Daten ausgelesen werden, gemäß einem Protokoll durchgeführt werden, welches sich von dem Datenübertragungsprotokoll im laufenden Überwachungsbetrieb des Reifendrucksensors unterscheidet. Für die Diagnoseverbindung kann beispielsweise ein Bluetooth-Protokoll verwendet werden, sodass zahlreiche Geräte, die Kommunikationen gemäß dem Bluetooth-Standard unterstützen als Diagnosegeräte eingesetzt werden können. Beispielsweise kann die Verwendung eines Mobilgerätes (zum Beispiel Smartphones) mit einer geeigneten Anwendung das Mobilgerät zum Diagnosegerät machen. Auf diese Weise könnte beispielsweise ein Benutzer sporadisch den Zustand seiner Fahrzeugreifen/Fahrzeugräder überprüfen. Je nachdem, welche Daten in dem Reifendrucksensor erhoben werden kann damit frühzeitig erkannt werden, ob eine Prüfung des Fahrzeugzustandes in einer Werkstatt erforderlich ist, beispielsweise weil schleichender Druckverlust auftritt oder durch Beschleunigungssensoren in einzelnen Rädern eine Unwucht festgestellt wurde.

Um die Diagnosedaten, die im separaten Speicherbaustein hinterlegt werden, besser auswertbar zu machen, ist vorzugsweise die Steuerschaltung so ausgebildet, dass im separaten Speicher gespeicherte Messwerte mit einem gespeicherten Zeitstempel versehen werden. Es ist dabei möglich, jeden einzelnen der gespeicherten Messwerte mit einem Zeitstempel zu versehen, es ist jedoch auch möglich, lediglich sporadisch Zeitstempel zu den Messwerten hinzuzufügen, um Speicherplatz zu sparen. Die zwischen den zeitlich markierten Messwerten liegenden Messwerte werden dann hinsichtlich ihres Erfassungszeitpunktes interpoliert.

In einer bevorzugten Ausführungsform des erfindungsgemäßen Reifendrucksensors sind neben einem Sensor zur Druckerfassung auch Sensoren zur Temperaturerfassung und weitere Sensoren, beispielsweise Sensoren zur Erfassung von Beschleunigungsmesswerten vorgesehen. Auch diese Messwerte können auszugsweise oder sämtlich im separaten Speicherbaustein hinterlegt werden, um ein möglichst vollständiges Bild des Betriebszustandes zu einem bestimmten Zeitpunkt zu erhalten.

In einer Weiterbildung der Erfindung ist vorgesehen, dass zusätzlich zu der Speicherung der Messwerte an sich, durch die Steuerschaltung berechnete Werte ebenfalls im separaten Speicher gespeichert werden. Solche Werte können beispielsweise Umdrehungsfrequenzen sein, die mithilfe von Beschleunigungssensoren ermittelt werden. Diese abgeleiteten, berechneten Werte können neben den Rohdaten der unmittelbar erfassten Messwerte im separaten Speicherbaustein hinterlegt werden.

Die Erfindung wird nun anhand der beiliegenden Zeichnung näher erläutert.
Figur 1 zeigt schematisch den Aufbau eines erfindungsgemäßen Universalsensors.
Figur 2 zeigt schematisch die Speicheraufteilung eines internen Speichers und eines separaten Speicherbausteins im erfindungsgemäßen Reifendrucksensor.
Figur 3 zeigt schematisch die Auslesung von im separaten Speicherbaustein abgespeicherten Daten.

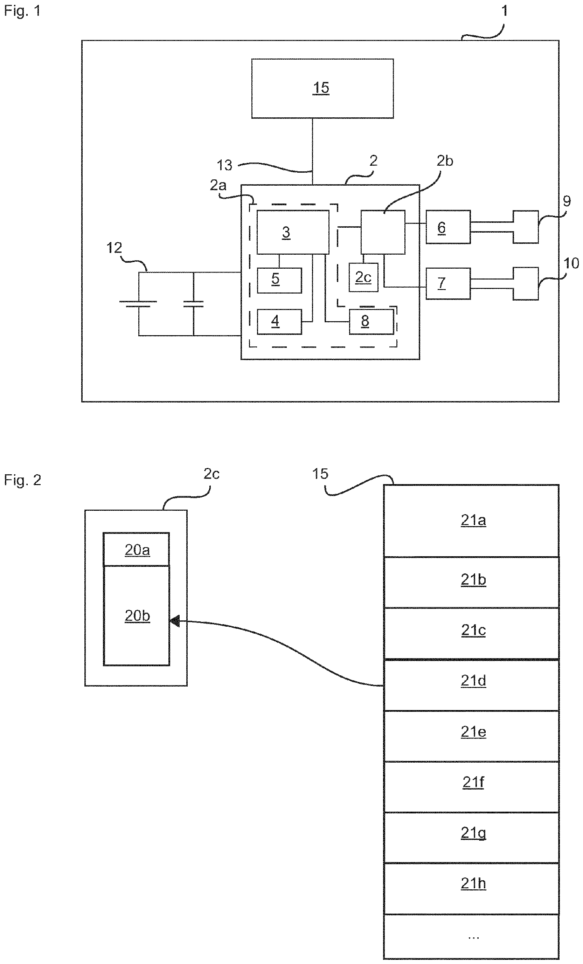

In Figur 1 ist ein Sensor in schematischer Darstellung gezeigt. Ein Gehäuse 1 umfasst sämtliche Komponenten des Sensors. In das Gehäuse 1 kann sich bei bestimmten Ausbildungsformen beispielsweise ein Ventilschaft eines Reifendruckventils erstrecken oder es kann mit dem Gehäuse 1 gekoppelt sein. Bei anderen Sensoren ist das Gehäuse 1 unabhängig von dem Ventilschaft im Reifen an anderer Stelle angeordnet, z.B. in der Lauffläche.

In dem Gehäuse 1 ist ein Steuerschaltung 2 angeordnet. Die Steuerschaltung 2 enthält eine Messschaltung 2a als integrierte Schaltung mit einem Mikrocontroller 3. Als Sensoren sind in der Messschaltung 2a in diesem Ausführungsbeispiel ein Drucksensor 4, ein Temperatursensor 5 und ein Beschleunigungssensor 8 vorgesehen. Weiterhin weist die Steuerschaltung 2 eine von der Messschaltung 2a separate Verarbeitungseinheit 2b auf, die z.B. ebenfalls durch einen Mikrocontroller oder eine sonstige Schaltung gebildet ist. Eine der Steuerschaltung 2 zugeordnete Hochfrequenz(HF)-Sende-Empfangseinheit 6 für eine Kommunikation mit einer Fahrzeug-Empfangseinrichtung ist mit einer HF-Antenne 9 gekoppelt und mit der Verarbeitungseinheit 2b. Eine weitere Hochfrequenz(HF)-Sende-Empfangseinheit 7 für Bluetooth-Kommunikation zu Diagnosezwecken ist mit der Verarbeitungseinheit 2b in der Steuerschaltung 2 gekoppelt, außerdem mit einer zugehörigen Bluetooth-Antenne 10.

Die Steuerschaltung 2 wird durch eine Energiequelle (z.B. Batteriespeicher mit Speicherkondensator oder einen Piezogenerator) vorsorgt, die insgesamt als Energieversorgung 12 bezeichnet ist.

In dem gezeigten Ausführungsbeispiel ist ein Speicherbaustein 15 separat von der Steuerschaltung 2 ausgebildet. Der separate Speicherbaustein 15 ist mit der Steuerschaltung 2 über eine Datenleitung 13 verbunden, so dass eine Datenkommunikation zwischen der Steuerschaltung 2, insbesondere der Verarbeitungseinheit 2b und dem separaten Speicherbaustein 15 möglich ist. Zusätzlich zu der Datenleitung 13 können Versorgungsleitungen (Spannung) und sonstige Leitungen (z.B. Wake-up Leitungen) zu dem separaten Speicherbaustein führen (nicht gezeigt).

Der Steuerschaltung 2 verfügt über einen internen Speicher 2c, der hinsichtlich der Speicherkapazität deutlich kleiner ist als der separater Speicherbaustein 15. Im Ausführungsbeispiel ist der Steuerschaltung 2 beispielsweise mit einem 8kB großen internen, dauerhaften Speicher 2c versehen.

Wie oben beschrieben und aus dem Stand der Technik zu Universalsensoren bekannt, wird der interne Speicher 2c bei Zuordnung des Reifendrucksensors zu einem Fahrzeug mit Inhalten aus dem separaten Speicherbaustein 15 konfiguriert. Ein Bootloader koordiniert dazu anfänglich die Kommunikation des Sensors mit der Außenwelt. Es wird mittels eines externen Steuergeräts (RDKS-Diagnosegerät, nicht gezeigt) eine Datensatzkennung über die Antenne 9 und die Sende-Empfangseinrichtung 6 an die Verarbeitungseinheit 2b übermittelt. Die Verarbeitungseinheit 2b greift über die Verbindung 13 auf den separaten Speicherbaustein 15 zu und ruft gemäß der übermittelten Kennung einen Speicherbereich ab. Der entsprechende Speicherbereich wird dann in den internen Speicher 2c umkopiert und dort dauerhaft gespeichert. Nach erfolgreichem Kopiervorgang weist dann die Steuerschaltung 2 im internen Speicher sowohl den Bootloader als auch eine ausführbare Applikation auf, die den dauerhaften Betrieb des Reifendrucksensors gemäß der programmierten Konfiguration zulässt.

Figur 2 verdeutlicht den Vorgang und die Speicheraufteilung in schematischer Weise.

Der interne Speicher 2c verfügt über einen Speicherabschnitt 20a, in dem dauerhaft der Bootloader und die Basisfunktionen der Steuerschaltung 2 gespeichert sind. Ein Abschnitt 20b ist für die Aufnahme der verschiedenen Konfigurationen von Parametern und Applikationen aus dem Separater Speicherbaustein 15 vorgesehen und wird für die Abarbeitung des Normalbetriebs nach erfolgreicher Konfiguration aufgerufen.

Der separate Speicherbaustein 15 verfügt in einem adressierbaren Speicherbereich 21a, in welchem gemäß diesem Ausführungsbeispiel ein Konfigurationsverzeichnis 21a abgespeichert ist. Dieses Konfigurationsverzeichnis adressiert Speicherbereiche 21b,..., 21h in Zuordnung zu verschiedenen Konfigurations-Kennungen. Diese entsprechenden Speicherabschnitte sind in der Figur 2 schematisch durch die Abschnitte 21b, 21c,..., 21h dargestellt.

Jeder der adressierbaren Speicherbereiche enthält Daten, die für die Konfiguration des Reifendrucksensors zwecks Anpassung auf eine Fahrzeuggruppe erforderlich sind. Es sind beispielsweise Parameter gespeichert, welche das Format eines vom Sensor an das Fahrzeug zu sendende Datentelegramm definieren. Es können auch vollständige und angepasste Programmcodes hinterlegt sein.

Bei Abarbeitung der Anweisungen des Bootloaders im Speicherbereich 20a wird übermittelt, welche Konfiguration aus dem Separater Speicherbaustein 15 abzurufen ist. Diese Konfigurationskennung wurde von außen übermittelt wie oben beschrieben. Anschließend wird zwischen der Steuerschaltung 2, insbesondere deren Verarbeitungseinheit 2b und dem separaten Speicherbaustein 15 eine leitungsgebundene Kommunikation abgewickelt und es wird in Speicherabschnitt 21a der Adressbereich nachgeschlagen, welcher das der Konfigurationskennung entsprechende Datenpaket enthält. In dem gezeigten Beispiel ist dies der Speicherbereich 21d. Der Inhalt dieses Speicherbereichs wird anschließend in den Speicherbereich 20b umkopiert.

Nach erfolgreichem Umkopieren enthält der Speicherbereich 20b dauerhaft die gewünschte, auf die zukünftige Anwendung konfigurierte Applikation. Im normalen Betriebsmodus kann dann sowohl die Erfassung der Sensorwerte, insbesondere der Reifendruckwerte über den Reifendrucksensor 4 gemäß der Konfiguration erfolgen, als auch die Übermittlung der erfassten Daten gemäß der auf das Fahrzeug angepassten Konfigurationsdaten.

Nachdem der Reifendrucksensor gemäß diesem Vorgehen konfiguriert wurde, schaltet die Steuerschaltung 2 mit ihrer Verarbeitungseinheit 2b bezüglich des separaten Speicherbausteins 15 von einem Lesemodus in einen Schreibmodus. In diesem Schreibmodus werden kontinuierlich, periodisch oder beim Auftreten von Messwerten, die vorgegebenen Kriterien entsprechen, Messdaten gespeichert. Die Messschaltung 2a erfasst also die Messwerte im Betrieb und diese werden über die Sende-Empfangseinrichtung 6 und die Antenne 9 an eine fahrzeugseitige Empfangseinrichtung gesendet. Zusätzlich werden sämtliche Messwerte oder eine Untergruppe der Messwerte in dem separaten Speicherbaustein 15 abgelegt. Dieser Vorgang ist in Figur drei schematisch dargestellt. Bevor oder nachdem die Verarbeitungseinheit 2b die Messwerte über die Sende-Empfangseinrichtung 6 und die Antenne 9 versandt hat, werden diese in dem separaten Speicherbaustein 15 gespeichert. Es kann insbesondere vorgesehen sein, solche Messwerte zu speichern, die eine signifikante Abweichung von vorhergehenden gespeicherten Messwerten zeigen oder in vorgegebenen Zeitabständen Messwerte abzulegen. Außerdem kann die Messwertspeicherung auch in Abhängigkeit von der Änderung von Zustandsdaten, beispielsweise Änderungen der Beschleunigungsdaten erfolgen, sodass zum Beispiel nur bei Fahrtantritt entsprechende Werte gespeichert werden.

Im dargestellten Ausführungsbeispiel werden die Messwerte von der Verarbeitungseinheit 2b der Steuereinrichtung 2 in einen Speicherbereich 22 abgelegt, welcher im separaten Speicherbaustein 15 als freier Speicherbereich ausgelegt ist. Entsprechend werden durch die gespeicherten Messdaten die Konfigurationsdaten 21a bis 21h nicht überschrieben. In einer abgewandelten Ausführungsform kann jedoch vorgesehen sein, dass nach erfolgreicher Erstkonfiguration der Speicherbereich überschreibbar ausgestaltet ist, der zuvor die ursprünglichen Konfigurationsdaten enthielt. In diesem Fall wird dann der Reifendrucksensor einmalig konfiguriert und anschließend behält dieser seine Konfiguration bei, während der Speicher mit den Konfigurationsdaten vollständig als Speicherplatz für Messwerte und Diagnosedaten zur Verfügung gestellt wird.

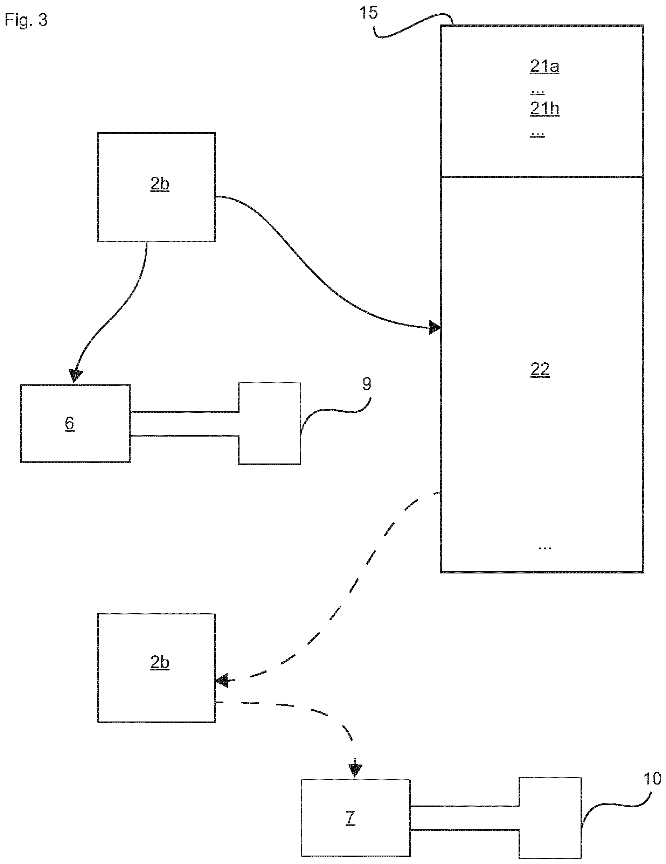

Wie in Figur 3 außerdem dargestellt ist, sind die im Speicher 15 und dort im Speicherbereich 22 abgelegten Messwerte durch die Verarbeitungseinheit 2b auch wieder abrufbar. Empfängt die Steuerschaltung 2 zum Beispiel ein Abfragesignal über die Sende-Empfangseinrichtung 7 und deren zugeordnete Antenne 10, so sorgt die Verarbeitungseinheit 2b für einen Abruf von dem Abfragesignal entsprechenden Messdaten aus dem Speicherbereich 22 des separaten Speicherbausteins 15. Die abgerufenen Daten werden dann über die Sende-Empfangseinrichtung 7 gemäß einem standardisierten Bluetooth-Protokoll durch die zugeordnete Antenne 10 versandt. Eine Abfrageeinrichtung, beispielsweise ein Smartphone mit darauf installierter Anwendung, kann das Standardprotokoll empfangen und die aus dem separaten Speicherbaustein 15 abgerufenen historischen Daten weiterverarbeiten. Der separater Speicherbaustein 15, der ursprünglich als Datenspeicher eine Vielzahl von Konfigurationsdaten zur Konfiguration des universellen Reifendrucksensors mitgebracht hat, ist in dieser Ausgestaltung als Speicher für ein Datenlogging verwendet, wenn er seine ursprüngliche Funktion bei der Erstkonfiguration erfüllt hat. Der Speicherbaustein 15 wird damit genutzt, um aus dem Reifendrucksensor ein diagnosefähiges System mit Datenspeicherung zu machen.

## Patentansprüche

1. Reifendrucksensor für Kraftfahrzeuge, aufweisend:
ein Gehäuse (1),
eine in dem Gehäuse (1) aufgenommene elektronische Steuerschaltung (2), welche eine integrierte Messschaltung (2a) aufweist, wobei die Messschaltung wenigstens einen Drucksensor (4) aufweist,
wobei in einem internen Speicher (2c) der Steuerschaltung (2) Konfigurationsdaten für die Messschaltung und/oder die Steuerschaltung speicherbar sind,
wobei Mittel (6, 9; 7, 10) zur drahtlosen Kommunikation mit der Steuerschaltung (2) gekoppelt sind, um mittels der Messschaltung (2a) erfasste Druckmesswerte gemäß den Konfigurationsdaten an eine entfernte Empfangseinrichtung zu übermitteln,
wobei die Steuerschaltung (2) mit einem separaten Speicherbaustein (15) mit nichtflüchtigem Speicher gekoppelt ist, wobei in dem separaten Speicherbaustein (15) eine Mehrzahl von Datenpaketen mit jeweils unterschiedlichen Konfigurationsdaten gespeichert sind,
wobei der separate Speicherbaustein (15) durch die Steuerschaltung (2) ansteuerbar ist, um ein darin gespeichertes Datenpaket in den internen Speicher (2c) der Steuerschaltung zu kopieren, um die Messschaltung und/oder die Steuerschaltung zu konfigurieren
**dadurch gekennzeichnet,**
**dass** die Steuerschaltung (2) ausgebildet ist, um nach der Konfiguration die mit der Messeinrichtung erfassten Messwerte in dem separaten Speicherbaustein zu speichern.

2. Reifendrucksensor nach Anspruch 1, wobei die Mittel zur drahtlosen Kommunikation wenigstens eine Antenne aufweist, die zum Versand von Daten auf verschiedenen Trägerfrequenzen ausgebildet und angesteuert ist.

3. Reifendrucksensor nach Anspruch 1, wobei die Mittel zur drahtlosen Kommunikation mehrere Antennen aufweisen, die jeweils zum Versand von Daten auf verschiedenen Trägerfrequenzen ausgebildet und angesteuert sind.

4. Reifendrucksensor nach einem der vorangehenden Ansprüche, wobei der separate Speicherbaustein beabstandet von der Steuerschaltung auf einer gemeinsamen Platine platziert ist.

5. Reifendrucksensor nach Patentanspruch 4, wobei der separate Speicherbaustein derart lösbar auf der Platine angeordnet ist, dass der Speicherbaustein zum Auslesen gespeicherter Daten und Diagnosezwecken zerstörungsfrei von der Platine abnehmbar ist.

6. Reifendrucksensor nach einem der vorangehenden Ansprüche, wobei die Steuerschaltung ausgebildet ist, im separaten Speicherbaustein gespeicherte Daten auszulesen und über die Mittel zur drahtlosen Kommunikation zu versenden.

7. Reifendrucksensor nach Patentanspruch 6, wobei die Steuerschaltung ausgebildet ist, die im Betrieb erfassten aktuellen Messwerte mit den Mitteln zur drahtlosen Kommunikation gemäß einem ersten Funkprotokoll zu versenden und die aus dem separaten Speicherbaustein ausgelesenen Daten gemäß einem abweichenden, zweiten Funkprotokoll zu versenden.

8. Reifendrucksensor nach einem der vorangehenden Patentansprüche, wobei die Steuerschaltung die im separaten Speicher gespeicherten Messwerte mit einem gespeicherten Zeitstempel versieht.

9. Reifendrucksensor nach einem der vorangehenden Patentansprüche, wobei weitere Sensoren als Teil der Messschaltung vorgesehen sind und die von der Steuerschaltung im separaten Speicher gespeicherten Messwerte neben Druckmesswerten weitere Messwerte der weiteren Sensoren, insbesondere Temperaturmesswerte und Beschleunigungsmesswerte aufweisen.

10. Reifendrucksensor nach Patentanspruch 9, wobei die Steuerschaltung aus den Messwerten weitere Werte berechnet und die berechneten Werte zusätzlich in dem separaten Speicher speichert.

11. Verfahren zum Betreiben eines Reifendrucksensors für Kraftfahrzeuge, aufweisend die Schritte:
- drahtloses Übertragen einer Auswahlkennung mittels eines Übertragungsgerätes an den Reifendrucksensor;
- Empfangen der Auswahlkennung mit einer Steuerschaltung im Reifendrucksensor und Betreiben eines in dem Reifendrucksensor angeordneten separaten Speichers im Konfigurationsmodus mit Hilfe der Steuerschaltung und Übertragen eines der Auswahlkennung entsprechenden Speicherbereichs aus dem separaten Speicher in einen kleineren Speicher, der in die Steuerschaltung integriert ist;
- nach erfolgtem Kopiervorgang, Durchführen einer Konfiguration des Reifendrucksensors mit den in den kleineren Speicher kopierten Daten,
- nach erfolgter Konfiguration, wechseln der Steuerschaltung von dem Konfigurationsmodus in einen Speichermodus, in welchem mit Hilfe der Steuerschaltung erfasst Messwerte in dem separaten Speicher gespeichert werden.

12. Verfahren nach Anspruch 11, wobei mit der Steuerschaltung Anforderungssignale empfangen werden und in Reaktion auf die Anforderungssignale im separaten Speicherbaustein gespeicherte Daten ausgelesen und über die Mittel zur drahtlosen Kommunikation versendet werden.

13. Verfahren nach Anspruch 12 mit der Steuerschaltung im Betrieb erfasste aktuelle Messwerte mit den Mitteln zur drahtlosen Kommunikation wiederholt gemäß einem ersten Funkprotokoll versendet werden und die aus dem separaten Speicherbaustein ausgelesenen Daten in Reaktion auf das ein Anforderungssignal gemäß einem abweichenden, zweiten Funkprotokoll versendet werden.

14. Verfahren nach einem der Ansprüche 11 bis 13, wobei mit der Steuerschaltung die im separaten Speicher gespeicherten Messwerte mit einem gespeicherten Zeitstempel versehen werden.

15. Verfahren nach einem der Ansprüche 11 bis 14, wobei mit weiteren Sensoren des Reifendrucksensors weitere Messwerte erfasst und in dem separaten Speicher gespeichert werden, insbesondere Temperaturmesswerte und Beschleunigungsmesswerte.

16. Verfahren nach einem der Ansprüche 10 bis 15, wobei mit der Steuerschaltung aus den Messwerten weitere Werte berechnet werden und die berechneten Werte zusätzlich in dem separaten Speicher gespeichert werden, wobei die berechneten Werte insbesondere Umdrehungsfrequenzen enthalten.

## Claims

1. Tire pressure sensor for motor vehicles, comprising
a housing (1),
an electronic control circuit (2) which is accommodated in the housing (1) and has an integrated measuring circuit (2a), the measuring circuit having at least one pressure sensor (4),
wherein configuration data for the measuring circuit and/or the control circuit can be stored in an internal memory (2c) of the control circuit (2),
wherein means (6, 9; 7, 10) for wireless communication are coupled to the control circuit (2) in order to transmit measured pressure values detected by means of the measuring circuit (2a) to a remote receiving device in accordance with the configuration data,
wherein the control circuit (2) is coupled to a separate memory device (15) having a non-volatile memory, wherein a plurality of data packets each having different configuration data are stored in the separate memory device (15),
wherein the separate memory module (15) can be activated by the control circuit (2) in order to copy a data packet stored therein into the internal memory (2c) of the control circuit in order to configure the measuring circuit and/or the control circuit
**characterized in that**
the control circuit (2) is designed to store the measured values recorded by the measuring device in the separate memory module after configuration.

2. Tire pressure sensor according to claim 1, wherein the means for wireless communication has at least one antenna which is designed and controlled to transmit data on different carrier frequencies.

3. Tire pressure sensor according to claim 1, wherein the means for wireless communication comprise several antennas, each of which is designed and controlled to transmit data on different carrier frequencies.

4. Tire pressure sensor according to one of the preceding claims, wherein the separate memory module is placed at a distance from the control circuit on a common circuit board.

5. Tire pressure sensor according to claim 4, wherein the separate memory module is detachably arranged on the circuit board in such a way that the memory module can be removed from the circuit board in a non-destructive manner for reading out stored data and for diagnostic purposes.

6. Tire pressure sensor according to one of the preceding claims, wherein the control circuit is designed to read out data stored in the separate memory module and to send it via the means for wireless communication.

7. Tire pressure sensor according to claim 6, wherein the control circuit is designed to send the current measured values detected during operation with the means for wireless communication according to a first radio protocol and to send the data read out from the separate memory module according to a deviating, second radio protocol.

8. Tire pressure sensor according to one of the preceding claims, wherein the control circuit provides the measured values stored in the separate memory with a stored time stamp.

9. Tire pressure sensor according to one of the preceding patent claims, wherein further sensors are provided as part of the measuring circuit and the measured values stored by the control circuit in the separate memory have, in addition to pressure measured values, further measured values of the further sensors, in particular temperature measured values and acceleration measured values.

10. Tire pressure sensor according to claim 9, wherein the control circuit calculates further values from the measured values and additionally stores the calculated values in the separate memory.

11. Method for operating a tire pressure sensor for motor vehicles, comprising the steps:
- wirelessly transmitting a selection identifier to the tire pressure sensor by means of a transmission device;
- receiving the selection identifier with a control circuit in the tire pressure sensor and operating a separate memory arranged in the tire pressure sensor in configuration mode with the aid of the control circuit and transferring a memory area corresponding to the selection identifier from the separate memory to a smaller memory which is integrated in the control circuit;
- after the copying process has been completed, carrying out a configuration of the tire pressure sensor with the data copied to the smaller memory,
- after configuration, switching the control circuit from the configuration mode to a storage mode in which measured values recorded with the aid of the control circuit are stored in the separate memory.

12. Method according to claim 11, wherein request signals are received with the control circuit and, in response to the request signals, data stored in the separate memory module is read out and transmitted via the means for wireless communication.

13. Method according to claim 12 with the control circuit, current measured values detected during operation are repeatedly transmitted with the means for wireless communication according to a first radio protocol and the data read out from the separate memory module are transmitted in response to the one request signal according to a deviating, second radio protocol.

14. Method according to any one of claims 11 to 13, wherein the control circuit is used to provide the measured values stored in the separate memory with a stored time stamp.

15. Method according to one of claims 11 to 14, wherein further measured values are recorded with further sensors of the tire pressure sensor and stored in the separate memory, in particular temperature measured values and acceleration measured values.

16. Method according to one of claims 10 to 15, wherein further values are calculated from the measured values using the control circuit and the calculated values are additionally stored in the separate memory, wherein the calculated values in particular contain rotation frequencies.

## Revendications

1. Capteur de pression de pneu pour véhicules automobiles, comprenant :
un boîtier (1),
un circuit de commande électronique (2) logé dans le boîtier (1), qui comprend un circuit de mesure intégré (2a), le circuit de mesure comprenant au moins un capteur de pression (4),
des données de configuration pour le circuit de mesure et/ou le circuit de commande pouvant être mémorisées dans une mémoire interne (2c) du circuit de commande (2),
dans lequel des moyens (6, 9 ; 7, 10) de communication sans fil sont couplés au circuit de commande (2) pour transmettre à un dispositif de réception distant des valeurs de mesure de pression détectées au moyen du circuit de mesure (2a) conformément aux données de configuration,
le circuit de commande (2) étant couplé à un module de mémoire séparé (15) avec une mémoire non volatile, une pluralité de paquets de données ayant chacun des données de configuration différentes étant stockés dans le module de mémoire séparé (15),
dans lequel le module de mémoire séparé (15) peut être commandé par le circuit de commande (2) pour copier un paquet de données qui y est stocké dans la mémoire interne (2c) du circuit de commande, afin de configurer le circuit de mesure et/ou le circuit de commande
**caractérisé en ce que**
**en ce que** le circuit de commande (2) est conçu pour enregistrer, après la configuration, les valeurs de mesure saisies avec le dispositif de mesure dans le module de mémoire séparé.

2. Capteur de pression de pneu selon la revendication 1, dans lequel les moyens de communication sans fil comprennent au moins une antenne qui est conçue et commandée pour envoyer des données sur différentes fréquences porteuses.

3. Capteur de pression de pneu selon la revendication 1, dans lequel les moyens de communication sans fil présentent plusieurs antennes qui sont chacune conçues et commandées pour envoyer des données sur différentes fréquences porteuses.

4. Capteur de pression de pneu selon l'une quelconque des revendications précédentes, dans lequel le module de mémoire séparé est placé à distance du circuit de commande sur une carte de circuit imprimé commune.

5. Capteur de pression de pneu selon la revendication 4, dans lequel le module de mémoire séparé est disposé de manière amovible sur la platine de telle sorte que le module de mémoire peut être retiré de la platine sans être détruit pour la lecture de données enregistrées et à des fins de diagnostic.

6. Capteur de pression de pneu selon l'une quelconque des revendications précédentes, dans lequel le circuit de commande est conçu pour lire des données stockées dans le module de mémoire séparé et pour les envoyer via les moyens de communication sans fil.

7. Capteur de pression de pneu selon la revendication 6, le circuit de commande étant conçu pour envoyer les valeurs de mesure actuelles détectées en fonctionnement avec les moyens de communication sans fil selon un premier protocole radio et pour envoyer les données lues dans le module de mémoire séparé selon un deuxième protocole radio différent.

8. Capteur de pression de pneu selon l'une quelconque des revendications précédentes, dans lequel le circuit de commande munit les valeurs de mesure enregistrées dans la mémoire séparée d'un horodatage enregistré.

9. Capteur de pression de pneu selon l'une quelconque des revendications précédentes, d'autres capteurs étant prévus comme partie du circuit de mesure et les valeurs de mesure mémorisées par le circuit de commande dans la mémoire séparée présentant, outre des valeurs de mesure de pression, d'autres valeurs de mesure des autres capteurs, en particulier des valeurs de mesure de température et des valeurs de mesure d'accélération.

10. Capteur de pression de pneu selon la revendication 9, le circuit de commande calculant d'autres valeurs à partir des valeurs mesurées et mémorisant en outre les valeurs calculées dans la mémoire séparée.

11. Procédé de fonctionnement d'un capteur de pression de pneu pour véhicules automobiles, comprenant les étapes consistant à :
- transmission sans fil d'un identifiant de sélection au moyen d'un dispositif de transmission au capteur de pression de pneu ;
- recevoir l'identifiant de sélection avec un circuit de commande dans le capteur de pression de pneu et faire fonctionner une mémoire séparée disposée dans le capteur de pression de pneu en mode de configuration à l'aide du circuit de commande et transférer une zone de mémoire correspondant à l'identifiant de sélection de la mémoire séparée vers une mémoire plus petite intégrée dans le circuit de commande ;
- une fois le processus de copie terminé, effectuer une configuration du capteur de pression des pneus avec les données copiées dans la mémoire plus petite,
- une fois la configuration effectuée, le circuit de commande passe du mode de configuration à un mode de stockage dans lequel les valeurs de mesure saisies à l'aide du circuit de commande sont stockées dans la mémoire séparée.

12. Procédé selon la revendication 11, dans lequel des signaux de demande sont reçus avec le circuit de commande et, en réponse aux signaux de demande, des données stockées dans le module de mémoire séparé sont lues et envoyées via les moyens de communication sans fil.

13. Procédé selon la revendication 12 avec le circuit de commande, les valeurs de mesure actuelles saisies en fonctionnement sont envoyées de manière répétée avec les moyens de communication sans fil selon un premier protocole radio et les données lues dans le module de mémoire séparé sont envoyées en réaction au signal de demande selon un deuxième protocole radio différent.

14. Procédé selon l'une quelconque des revendications 11 à 13, dans lequel le circuit de commande permet de munir les valeurs de mesure stockées dans la mémoire séparée d'un horodatage enregistré.

15. Procédé selon l'une quelconque des revendications 11 à 14, dans lequel d'autres valeurs de mesure sont détectées par d'autres capteurs du capteur de pression de pneu et sont stockées dans la mémoire séparée, en particulier des valeurs de mesure de température et des valeurs de mesure d'accélération.

16. Procédé selon l'une quelconque des revendications 10 à 15, dans lequel d'autres valeurs sont calculées à partir des valeurs mesurées à l'aide du circuit de commande et les valeurs calculées sont en outre enregistrées dans la mémoire séparée, les valeurs calculées contenant notamment des fréquences de rotation.
